# FASCICULE DE BREVET EUROPEEN

(11) **EP 0 914 977 B1**
(45) Date de publication et mention de la délivrance du brevet: **25.09.2002**
(21) Numéro de dépôt: 98402665.8
(22) Date de dépôt: 27.10.1998
(51) Int. Cl.: B60G 21/05, B60G 7/02

(54) **Train arrière comportant un dispositif d'articulation d'un bras oscillant tiré sur une structure d'un véhicule automobile**
Hinterachse mit einer Gelenkvorrichtung zwischen einem oszillierenden Längslenker und dem Kraftfahrzeugaufbau
Rear axle comprising an articulation device of an oscillating trailing arm on the structure of a motor vehicle

(30) Priorité: 06.11.1997 FR 9713937
(43) Date de publication de la demande: 12.05.1999
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, 91390 Morsang sur Orge (FR)
(74) Mandataire: Gendraud, Pierre

(56) Documents cités:
- EP-A- 0 389 363
- DE-A- 3 524 763
- DE-A- 3 912 924
- DE-A- 4 322 910
- FR-A- 2 129 902
- FR-A- 2 564 785
- US-A- 4 744 587
- PATENT ABSTRACTS OF JAPAN vol. 007, no. 257 (M-256), 16 novembre 1983 & JP 58 139811 A (TOYO KOGYO KK), 19 août 1983

## Description

La présente invention se rapporte à un train arrière, du type à traverse déformable, comportant un dispositif d'articulation d'un bras oscillant tiré sur une structure d'un véhicule automobile.

De tels trains arrière sont constitués de deux bras tirés reliés entre eux par une traverse dont l'une des extrémités des bras supporte l'axe des roues et l'autre extrémité est fixée à la structure au moyen d'une articulation élastique, destinée à filtrer en partie les vibrations en provenance de la roue.

Afin d'éliminer l'effet survireur du train arrière, lorsque le véhicule est soumis à des accélérations transversales, particulièrement en virage, ce qui est néfaste à sa bonne tenue de route, il est connu, notamment par le brevet FR 2 564 785, d'incliner les axes des articulations élastiques par rapport à l'axe transversal du véhicule, de manière à ce que les lignes virtuelles perpendiculaires passant par le milieu des axes des articulations se rencontrent au-delà de l'axe des roues repoussant ainsi le centre instantané de rotation du train en arrière d'un axe passant par le centre des roues.

Il s'avère très intéressant d'incliner fortement les axes des articulations par rapport à l'axe transversal du fait que sous efforts transversaux les articulations travaillent davantage en compression radiale, donc dans de bonnes conditions permettant ainsi de diminuer la raideur axiale des articulations et ceci proportionnellement avec l'augmentation de cette inclinaison

Cependant, on constate que l'augmentation de l'inclinaison des axes des articulations, sans toutefois dépasser la valeur angulaire de cette inclinaison qui situerait le centre instantané à l'avant de l'axe passant par le centre des roues, engendre, lors des débattements verticaux de la roue, des sollicitations en torsion conique sur les articulations très importantes, de sorte que ces dernières se déteriorent et n'ont donc plus la possibilité de filtrer correctement le train, ce qui est néfaste au confort du véhicule.

Le document DE 43 22 910, qui sert de base pour la présentation en deux parties de la revendication 1, décrit un train arrière du type à bras tirés reliés à une traverse dans lequel chaque bras tiré est relié à un prolongement en tôle retournée dans laquelle est intercalée un élément de filtrage élastique lui-même logeant un élément de couplage relié à des cales élastiques vissées directement à la structure du véhicule en étant parallèles à la traverse. Ici encore, les cales élastiques sont sollicitées exclusivement en torsion, ce qui est également préjudiciable au confort du véhicule.

L'invention a pour but de remédier à l'inconvénient précité en proposant, pour un train arrière tel que décrit ci-dessus, un dispositif d'articulation du support de roue sur la structure du véhicule qui permet un bon confort du véhicule sous une inclinaison importante des axes des articulations par rapport à l'axe transversal du véhicule.

A cet effet, la présente invention a pour objet un train arrière du type à traverse déformable *pour* véhicule automobile, constitué de deux bras tirés *identiques* reliés entre eux par une traverse , *dans lequel l'une* des extrémités des bras *est adaptée pour supporter un pivot de roue* et *l'autre* extrémité des bras opposée est *adaptée pour être fixée* à la structure *du véhicule* et *comprend* un dispositif d'articulation constitué d'une part d'un moyen de débattement angulaire vertical de la roue et d'autre part d'un moyen de filtrage du train arrière, caractérisé en ce que le moyen de débattement angulaire vertical de la roue est constitué d'une rotule pourvue d'une queue de rotule fixée de façon démontable à l'extrémité du bras et d'une tête de rotule disposée dans un logement prévu dans un boîtier et en ce que le moyen de filtrage est constitué par deux cales élastiques (22) qui sont engagées respectivement sur des axes cylindriques (17, 18) qui prolongent de part et d'autre le boîtier (16).

Le train arrière suivant l'invention peut d'ailleurs comporter une ou plusieurs des caractéristiques suivantes:
- chacune des cales élastiques est adhérisée d'une part à une bague interne apte à coopérer avec l'un des axes cylindriques et d'autre part à une bague externe munie d'un épaulement apte à être emmanchée en force dans un manchon cylindrique solidaire d'une platine qui est fixée sur la structure au moyen de vis de fixation.
- le manchon cylindrique est pourvu d'une ouverture réalisée perpendiculairement par rapport à l'axe de l'articulation et qui est dimensionnée de telle sorte qu'elle permette d'une part l'introduction des axes cylindriques du boîtier lors du montage et d'autre part le déplacement angulaire de l'ensemble tête-queue de rotule dans le manchon lors des débattements verticaux de la roue.
- l'épaulement de la bague externe est muni d'un appui élastique du côté opposé à la rotule.
- sur chacune des extrémités des axes opposée à la rotule est fixée une pièce, du type rondelle plate, qui prend appui axialement sur la bague interne de la cale assurant ainsi un rôle de butée axiale avec le manchon dans les deux sens de l'axe de l'articulation et qui est apte à prendre appui lors des efforts transversaux ou longitudinaux exercés sur les roues au moment d'un virage ou freinage sur l'appui élastique de l'une ou l'autre des cales.

Les caractéristiques de l'invention mentionnées ci-dessus, ainsi que d'autres, apparaîtront plus clairement à la lecture de la description suivante d'un exemple de réalisation en se référant aux dessins annexés sur lesquels :
- la figure 1 est une vue de dessus d'un train arrière à traverse déformable pourvu d'un dispositif d'articulation sur caisse selon l'invention ;
- la figure 2 est une vue en coupe, à plus grande échelle, du dispositif d'articulation, côté droit, d'un bras du train arrière de la figure 1, sur la structure du véhicule ;
- la figure 3 est une vue suivant la ligne III-III de la figure 1, sans la roue.

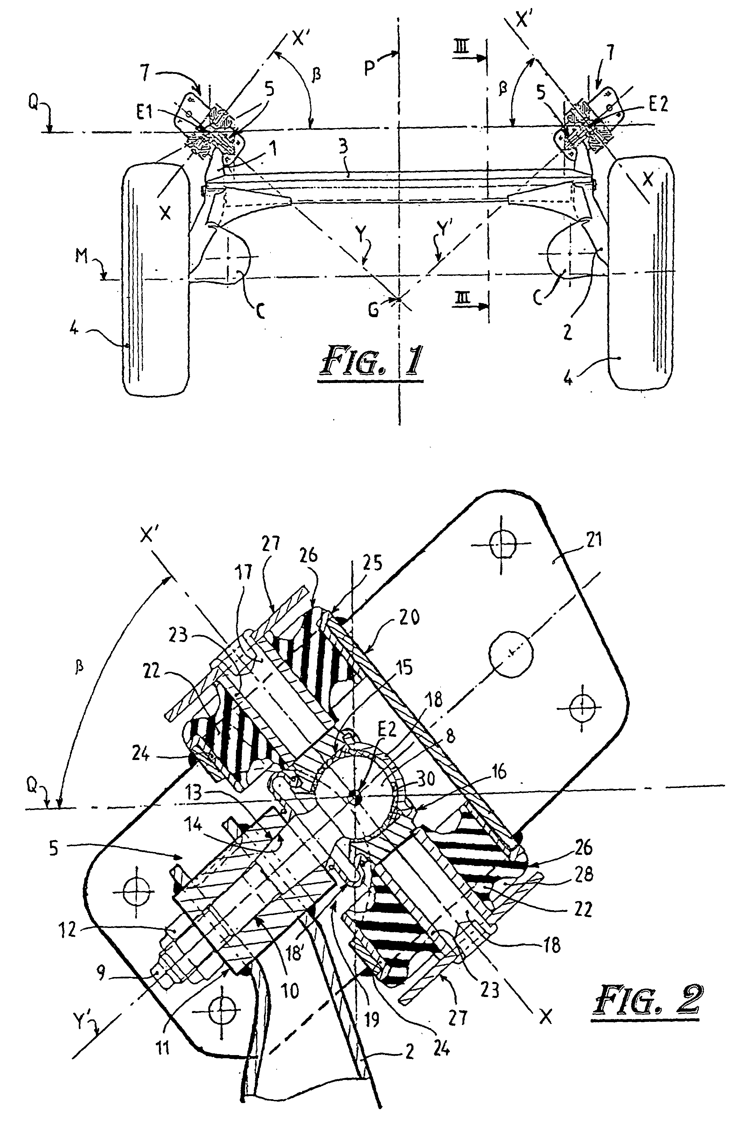

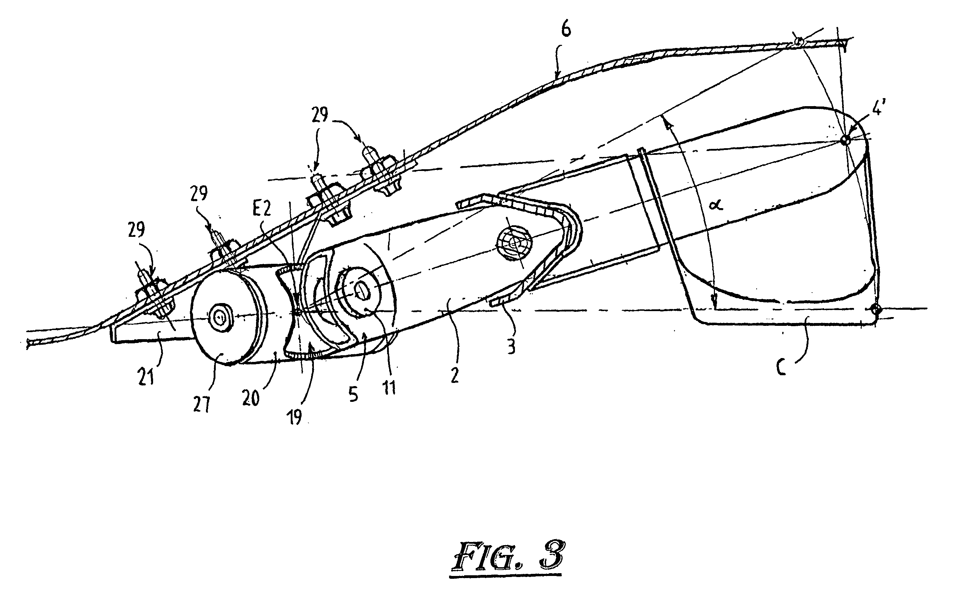

On a représenté à la figure 1, un train arrière à traverse déformable d'un véhicule automobile qui est constitué, classiquement, de deux bras tirés 1 et 2 reliés entre eux par une traverse 3, de section en forme de V comme visible à la figure 3, dont l'une des extrémités des bras supporte un pivot, non représenté, des roues 4 et l'autre extrémité 5 est fixée à la structure 6 au moyen d'un dispositif d'articulation 7.

La traverse 3 est située en avant d'un axe M passant par le centre 4' des roues 4.

Ce type de train est pourvu pour chaque roue, de manière connue, de moyens d'amortissements verticaux constitués de ressorts hélicoïdaux prenant appui d'une part sur une coupelle C soudée au bras 1 ou 2 et d'autre part sur la structure 6 et également d'un amortisseur, non représenté.

Classiquement, le dispositif d'articulation de chaque bras 1, 2 du train arrière est pourvu d'un axe XX' qui est incliné d'un angle β par rapport à un axe transversal Q au véhicule, de manière à ce que les lignes virtuelles perpendiculaires Y et Y' passant par le milieu E1 et E2 respectivement de l'axe XX' de l'articulation du bras 1 et du bras 2 se rencontrent au-delà de l'axe M des roues repoussant ainsi le centre instantané G de rotation du train en arrière de cet axe M.

Selon la présente invention, le dispositif d'articulation 7 est constitué pour chaque bras 1, 2 d'une part d'un moyen de débattement angulaire vertical de la roue et d'autre part d'un moyen de filtrage du train arrière.

Dans un souci de simplification de la description seul le dispositif d'articulation 7 côté droit, en considérant la figure 1, est décrit par la suite, l'articulation côté gauche étant symétrique par rapport à un axe médian P longitudinal au véhicule.

Le moyen de débattement angulaire vertical est constitué, comme visible sur la figure 2, d'une rotule pourvue d'une tête 8 de rotule et d'une queue 9 de rotule.

La queue 9 de rotule est engagée dans un trou 10 pourvu sur une douille 11 solidaire de l'extrémité 5 du bras 2 opposée au pivot de la roue et fixée de façon démontable à ce dernier par l'intermédiaire d'un écrou 12, et par la coopération de surfaces tronconiques 13, 14 respectivement de la douille 11 et de la queue 9 de rotule.

La tête 8 de rotule est disposée dans un logement 15 prévu dans un boîtier 16 dans lequel sont interposés des paliers antifriction 30.

Afin de protéger la tête 8 de rotule des éléments extérieurs du type eau, boue et maintenir un graissage suffisant sur cette dernière, il est prévu en considérant la figure 2, d'une part un couvercle 18 qui est serti sur la partie supérieure du boîtier 16, et d'autre part un soufflet d'étanchéite 18' fixé respectivement sur la partie inférieure du boîtier 16 et sur la queue 9 de rotule.

Le boîtier 16 se prolonge de part et d'autre du centre de rotation E2 de la tête 8 de rotule, en position d'utilisation, suivant l'axe XX' de l'articulation par un axe cylindrique respectivement 17 et 18, qui sont introduits par l'intermédiaire d'une ouverture 19 réalisée perpendiculairement par rapport à l'axe XX' de l'articulation dans un manchon cylindrique 20 solidaire, notamment par soudure, d'une platine 21 qui est fixée sur la structure 6 du véhicule au moyen de vis de fixation 29, comme visible à la figure 3.

On notera que l'ouverture 19 est dimensionnée de telle sorte qu'elle permette lors des débattements verticaux de la roue suivant l'angle α, visible à la figure 3, le déplacement angulaire de l'ensemble tête-queue 8-9 de rotule dans le manchon 20.

Le moyen de filtrage du train est constitué par deux cales élastiques 22 en caoutchouc qui sont engagées respectivement sur les axes cylindriques 17 et 18 du boîtier 16.

Chacune des cales 22 est adhérisée d'une part à une bague interne 23 apte à coopérer avec l'un des axes 17 ou 18 et d'autre part à une bague externe 24 qui est munie d'un épaulement 25 avec un appui élastique 26 en bout du côté exterieur au manchon 20 et qui est liée à ce dernier par emmanchement par force.

A chacune des extrémités des axes 17 et 18 opposée à la rotule est fixée, notamment par sertissage, une pièce 27 du type rondelle plate, qui prend appui axialement sur la bague interne 23 de la cale 22 assurant ainsi un rôle de butée axiale avec le machon 20 dans les deux sens de l'axe XX'.

On notera que les cales 22 comportent des évidements 28 comme visible à la figure 2, afin qu'elles puissent se déformer et permettre un bon filtrage des efforts transversaux et/ou longitudinaux exercés sur la roue.

On comprend à la lecture de la description qu'un tel dispositif d'articulation, selon la présente invention, permet avantageusement de séparer la fonction débattement angulaire vertical et la fonction filtrage-guidage, de manière simple, de sorte que l'inclinaison de l'axe des articulations peut aisément se situer sous un angle β important, d'environ 50°, par rapport à l'axe transversal du véhicule sans créer des sollicitations en torsion conique sur les cales élastiques.

Les cales 22 travaillent ainsi uniquement en compression, principalement en compression radiale, dans de bonnes conditions de fonctionnement de filtrage.

De plus, un tel dispositif permet également de dimensionner facilement les raideurs des cales élastiques en fonction du type de véhicule afin d'atteindre un bon niveau de confort et de comportement du véhicule.

## Revendications

1. Train arrière du type à traverse déformable *pour* véhicule automobile, constitué de deux bras tirés (1,2) *identiques* reliés entre eux par une traverse (3), *dans lequel l'une* des extrémités des bras *est adaptée pour supporter un pivot de roue (4)* et *l'autre* extrémité (5) des bras opposée est *adaptée pour être fixée* à la structure (6) *du véhicule* et *comprend* un dispositif d'articulation (7) constitué d'une part d'un moyen de débattement (8, 9) angulaire vertical de la roue (4) et d'autre part d'un moyen de filtrage (22, 23, 24) du train arrière, **caractérisé en ce que** le moyen de débattement angulaire vertical de la roue est constitué d'une rotule pourvue d'une queue (9) de rotule fixée de façon démontable à l'extrémité (5) du bras (1,2) et d'une tête (8) de rotule disposée dans un logement (15) prévu dans un boîtier (16) et **en ce que** le moyen de filtrage est constitué par deux cales élastiques (22) qui sont engagées respectivement sur des axes cylindriques (17, 18) qui prolongent de part et d'autre le boîtier (16).

2. Train arrière selon la revendication 1, **caractérisé en ce que** chacune des cales élastiques (22) est adhérisée d'une part à une bague interne (23) apte à coopérer avec l'un des axes cylindriques (17 ou 18) et d'autre part à une bague externe (24) munie d'un épaulement (25) et emmanchée en force dans un manchon cylindrique (20) solidaire d'une platine (21) *adaptée pour être* fixée sur la structure (6) *du véhicule* au moyen de vis de fixation (29).

3. Train arrière selon la revendication 2, **caractérisé en ce que** le manchon cylindrique (20) est pourvu d'une ouverture (19) réalisée perpendiculairement par rapport à *l'axe de symétrie des axes cylindriques (17 ou 18)* et qui est dimensionnée de telle sorte qu'elle permette d'une part l'introduction des axes cylindriques (17, 18) du boîtier (16) lors du montage et d'autre part le déplacement angulaire de l'ensemble tête-queue (8-9) de rotule dans le manchon (20) lors des débattements verticaux (α) de la roue (4).

4. Train arrière selon la revendication 2, **caractérisé en ce que** l'épaulement (25) de la bague externe (24) est muni d'un appui élastique (26) du côté opposé à la rotule.

5. Train arrière selon les revendications 1 et 4, **caractérisé en ce que** sur chacune des extrémités des axes (17, 18) opposée à la rotule (8) *est fixée* une pièce (27), du type rondelle plate, qui prend appui axialement sur la bague interne (23) de la cale assurant ainsi un rôle de butée axiale avec le manchon (20) dans les deux sens *de l'axe de symétrie (XX') des axes cylindriques (17 ou 18)* et qui est apte à prendre appui lors des efforts transversaux ou longitudinaux exercés sur les roues (4) au moment d'un virage ou freinage sur l'appui élastique (26) de l'une ou l'autre des cales (22).

6. Train arrière selon la revendication 1, **caractérisé en ce que** l'angle β *d'inclinaison de l'axe de symétrie (XX') des axes cylindriques (17, 18)* est d'environ 50° *par rapport à l'axe de la traverse (3) au montage sur le véhicule, l'axe de symétrie (YY') de la rotule étant perpendiculaire à l'axe (XX').*

## Claims

1. Rear axle of the type with a deformable cross-member for a motor vehicle, constituted by two identical trailing arms (1, 2) connected to each other by a cross-member (3), in which one of the ends of the arms is adapted so as to support a wheel pivot (4) and the other end (5) of the opposite arms is adapted so as to be fixed to the structure (6) of the vehicle and comprises an articulation device (7) constituted on the one hand by a vertical angular clearance means (8, 9) for the wheel (4) and on the other hand by a filtering means (22, 23, 24) for the rear axle, **characterised in that** the vertical angular displacement means for the wheel is constituted by a ball joint equipped with a ball-joint pin (9) fixed so as to be removable at the end (5) of the arm (1, 2) and by a ball-joint head (8) arranged in a housing (15) provided in a case (16) and **in that** the filtering means is constituted by two resilient wedges (22) which are engaged respectively on cylindrical axes (17, 18) that extend the case (16) on either side.

2. Rear axle according to Claim 1, **characterised in that** each of the resilient wedges (22) is bonded on the one hand to an internal ring (23) suitable for co-operating with one of the cylindrical axes (17 or 18) and on the other hand to an external ring (24) provided with a shoulder (25) and force-fitted into a cylindrical sleeve (20) integral with a support plate (21) adapted so as to be fixed to the structure (6) of the vehicle by means of fastening screws (29).

3. Rear axle according to Claim 2, **characterised in that** the cylindrical sleeve (20) is provided with an opening (19) made perpendicular to the axis of symmetry of the cylindrical axes (17, 18) and which is dimensioned such that, on the one hand, it permits the introduction of the cylindrical axes (17, 18) of the case (16) during assembly and, on the other hand, it permits the angular displacement of the ball-joint head-pin unit (8-9) within the sleeve (20) at the time of vertical clearances (a) of the wheel (4).

4. Rear axle according to Claim 2, **characterised in that** the shoulder (25) of the external ring (24) is provided with a resilient support (26) on the side opposite the ball joint.

5. Rear axle according to Claims 1 and 4, **characterised in that** on each end of the axes (17, 18) opposite the ball joint (8) is fixed a part (27), of the flat washer type, that bears axially on the internal ring (23) of the wedge thus providing a role of axial stop together with the sleeve (20) in both directions of the axis of symmetry (XX') of the cylindrical axes (17 or 18) and that is capable of bearing during transverse or longitudinal forces exerted on the wheels (4) when turning or braking on the resilient support (26) of one or other of the wedges (22).

6. Rear axle according to Claim 1, **characterised in that** the angle β of inclination of the axis of symmetry (XX') of the cylindrical axes (17, 18) is approximately 50° with respect to the transverse axis (3) on assembly on the vehicle, the axis of symmetry (YY') of the ball joint being perpendicular to the axis (XX').

## Patentansprüche

1. Hinterachse mit beweglichem Querträger für ein Kraftfahrzeug, bestehend aus zwei gleichen, gezogenen Armen (1, 2), die über einen Querträger (3) miteinander verbunden sind, wobei eines der Armenden einen Bolzen des Rads (4) tragen kann und das andere, gegenüberliegende Armende (5) am Aufbau (6) des Fahrzeugs befestigt werden kann und eine Gelenkvorrichtung (7) umfasst, die zum einen aus einer Einrichtung zum vertikalen Winkelausschlag (8, 9) des Rads (4) und zum anderen aus einer Dämpfeinrichtung (22, 23, 24) der Hinterachse besteht, **dadurch gekennzeichnet, dass** sich die Einrichtung zum vertikalen Winkelausschlag des Rads aus einem Gelenk zusammensetzt, das mit einem Gelenk-Endstück (9) versehen ist, welches abnehmbar am Ende (5) des Arms (1, 2) befestigt ist, und aus einem Gelenkkopf (8), der in einer Aufnahme (15) in einem Gehäuse (16) angeordnet ist, und dadurch, dass die Dämpfeinrichtung aus zwei elastischen Scheiben (22) besteht, die jeweils mit zylindrischen Achsen (17, 18) verbunden sind, welche das Gehäuse (16) auf beiden Seiten verlängern.

2. Hinterachse nach Anspruch 1, **dadurch gekennzeichnet, dass** jede der elastischen Scheiben (22) zum einen an einem Innenring (23) haftet, der mit einer der zylindrischen Achsen (17 oder 18) zusammenwirken kann, und zum anderen an einem Außenring (24), der mit einer Schulter (25) versehen ist und in eine zylindrische Muffe (20) eingepresst ist, die mit einer Halteplatte (21) fest verbunden ist, welche mittels Befestigungsschrauben (29) am Aufbau (6) des Fahrzeugs befestigt werden kann.

3. Hinterachse nach Anspruch 2, **dadurch gekennzeichnet, dass** die zylindrische Muffe (20) mit einer Öffnung (19) versehen ist, die senkrecht zur Symmetrieachse der zylindrischen Achsen (17 oder 18) ausgebildet und so dimensioniert ist, dass sie zum einen das Einführen der zylindrischen Achsen (17, 18) des Gehäuses (16) bei der Montage und zum anderen die Winkelverschiebung der Einheit aus Kopf und Endstück (8-9) des Gelenks in der Muffe (20) bei vertikalen Ausschlägen (α) des Rads (4) erlaubt.

4. Hinterachse nach Anspruch 2, **dadurch gekennzeichnet, dass** die Schulter (25) des Außenrings (24) mit einer elastischen Auflage (26) auf der dem Gelenk gegenüberliegenden Seite versehen ist.

5. Hinterachse nach den Ansprüchen 1 und 4, **dadurch gekennzeichnet, dass** an jedem der Enden der Achsen (17, 18), die dem Gelenk (8) gegenüberliegen, ein Teil (27) von der Art einer Platte befestigt ist, das sich axial am Innenring (23) der Scheibe abstützt, und so die Funktion eines axialen Anschlags gegenüber der Muffe (20) in beiden Richtungen der Symmetrieachse (XX') der zylindrischen Achsen (17 oder 18) erfüllt und sich in einer Kurve oder beim Bremsen bei quer oder längs auf die Räder (4) wirkenden Kräften an der elastischen Auflage (26) der einen oder anderen der Scheiben (22) abstützen kann.

6. Hinterachse nach Anspruch 1, **dadurch gekennzeichnet, dass** der Neigungswinkel β der Symmetrieachse (XX') der zylindrischen Achsen (17, 18) ungefähr 50° bezüglich der Achse des Querträgers (3) bei der Montage am Fahrzeug beträgt, wobei die Symmetrieachse (YY') des Gelenks senkrecht zur Achse (XX') verläuft.
